# NEW EUROPEAN PATENT SPECIFICATION

(11) **EP 1 286 856 B2**
(45) Date of publication and mention of the opposition decision: **25.01.2017**
(45) Mention of the grant of the patent: 06.03.2013
(21) Application number: 00992856.5
(22) Date of filing: 07.12.2000
(51) Int. Cl.: B60R 21/272

(54) **VEHICLE INFLATOR FOR GENERATING SHOCK WAVE THAT OPENS BURST DISC**
AUFBLASVORRICHTUNG FÜR FAHRZEUG ZUM AUSLÖSEN EINER STOSSWELLE, DIE EINE SCHEIBENAUFBLASVORRICHTUNG ÖFFNET
ACCESSOIRE DE GONFLAGE POUR GENERER DES ONDES DE CHOC OUVRANT UN DISQUE DE SECURITE

(30) Priority: 09.12.1999 US 458578
(43) Date of publication of application: 05.03.2003
(73) Proprietor: Autoliv ASP, Ogden, UT 84405 (US)
(72) Inventor: DILORENZO, Thomas, G., Arvada, CO 80003 (US)
(74) Representative: Poindron, Cyrille
(86) International application number: PCT/US2000/042655
(87) International publication number: WO 2001/042047

(56) References cited:
- US-A- 5 593 180
- US-A- 5 609 361
- US-A- 5 615 912
- US-A- 5 762 368
- US-A- 6 062 599
- US-B1- 6 196 584

## Description

### FIELD OF THE INVENTION

The present invention relates to an inflator having stored gas used to inflate an inflatable and, in particular, to stored gas exiting an inflator due to rupturing a burst disc using a shock wave.

### BACKGROUND OF THE INVENTION

Inflators are used in vehicles to inflate air bags or other inflatables. Hybrid inflators are widely utilized for such a purpose and include a stored gas. The gases output by a conventional hybrid inflator are relatively hot to inflate the air bag with sufficient pressure. Sufficient inflation pressure could also be achieved with a cooler gas, but it has been found in conventional air bag applications (i.e., frontal air bags) that too cool a gas results in significant penalties for weight, size and cost due to the greater number of gas moles required (for frontal air bags, the required number of gas moles is approximately inversely proportional to the gas absolute temperature). To achieve hotter inflation gases, it is common to include sufficient propellant or other gas generating material in the hybrid inflator having the stored gas.

After activation of such a conventional hybrid inflator, it becomes necessary to release the inflation gases (propellant and stored gases) from the inflator housing. This is typically accomplished by opening or rupturing a burst disc. In one embodiment of prior art hybrid inflators, the generated heat and pressure of the inflation gases cause the rupturing or opening of the burst disc. When the pressure inside the inflator housing exceeds the burst pressure of the burst disc, it opens to release these inflation gases. The hot inflation gases used to open the burst disc complement the usual objective of providing relatively hot gases to the inflatable upon their release from the inflator housing.

With respect to vehicle usage, inflators, particularly hybrid inflators, have been located in different sections or areas of the vehicle. These inflators include a passenger side inflator, a driver side inflator and a side impact inflator. In addition, curtain inflators have been devised or proposed for locating along the side of the vehicle above the windows. Because curtain inflators are usually located at a significant distance (over one meter) from the curtain air bag, there is great heat loss from the hot gas to the walls of the long conduit to the curtain air bag. Further, curtain air bags are often desired to remain inflated for a longer period of time (e.g., 7 seconds or more, in contrast to the about 1 second for frontal air bags). Accordingly, a curtain inflator requires much cooler gas than frontal air bags.

It would be advantageous therefore to devise an inflator that inflates an inflatable with relatively cooler gas at a low cost and with fewer parts. The stored gas in the inflator must also be released by opening a burst disc when the inflator is activated.

US 5 762 368 discloses an inflator for inflating an inflatable using stored gas comprising at least an inflator housing containing the stored gas and an initiator assembly, where: - the inflator housing includes an outlet member, having a burst pressure, from which the stored gas escapes when it is opened; - the initiator assembly includes an initiator with an initiator charge, which is ignited when the inflatable is to be inflated using the stored gas; - the stored gas is mixed with the combustion products of the initiation charge to generate heat, which further pressurises the stored gas so as to overcome the burst pressure opening the outlet member. The inflator disclosed by US 5 762 368 can also comprise a shock wave generator generating a shock wave which opens the outlet member before mixing the stored gas with the combustion products.

### SUMMARY OF THE INVENTION

In accordance with the present invention, an inflator is provided for inflating an air bag or other inflatable. The inflator has particular utility where it is desirable or acceptable to deliver a relatively cooler gas. The inflator includes an inflator housing having a rupturable burst disc or other appropriate outlet member. Stored gas contained in the inflator is able to escape from or exit the burst disc after it is opened or ruptured. The stored gas is primarily comprised of an inert gas, such as a mixture of argon and helium in a preferred embodiment. The burst disc is to be opened without a projectile or other comparable mechanical parts. The burst disc is opened by exceeding the burst pressure of the disc using pressure from a shock wave that is developed when the inflator is activated.

The inflator also includes an initiator assembly having an initiator with an initiator charge that includes one or more active ingredients or compositions. When the initiator charge is ignited, the shock wave is generated, which increases the pressure associated with the stored gas at least, at any one instance in time, at certain areas or portions along the length of the inflator housing. The initiator assembly is typically located at a first end of the inflator housing, although it could extend into the inflator housing, e.g. up to a majority or greater of the length of the inflator housing or the stored gas in the inflator housing. The burst disc is positioned relatively more adjacent to a second end of the housing. The stored gas can be contained between the initiator assembly and the burst disc. In order that the shock wave be effectively used to rupture the burst disc when the inflator is activated, the inflator housing is free of any barrier or other obstruction that would render ineffective the shock wave that is generated by the initiator assembly and which must travel through the stored gas in the inflator housing to the burst disc and the second end of the inflator housing.

It is also desirable that a geometric relationship or desired arrangement of inflator parts be provided involving the initiator assembly and the burst disc. In particular, the initiator having the initiator charge can be defined as including a center line that extends through the center of the initiator charge and continues towards the second end of the inflator housing. The burst disc can also be defined as having a center axis that passes through its center. The center line of the initiator and the center axis of the burst disc are aligned or co-axial. Any offset between this center line and the center axis is preferably less than .25 of the inner diameter of the inflator housing and, more preferably, no greater than .20 of the inner diameter of the inflator housing. Any such offset is defined along a distance substantially perpendicular to the center line.

A further desirable geometric restraint relates to the distance between the burst disc and the initiator charge. This distance should be at least twice the inner diameter of the inflator housing, which diameter is essentially the same as the diameter of the shock wave.

In a preferred embodiment, all of the active composition or ingredients useful in generating the shock wave for opening the burst disc are part of the initiator charge. Such active material, when the inflator is activated, causes an increase in pressure of the stored gas, at least along certain areas or portions of the inflator housing at any instance in time. In another embodiment, additional active ingredient or composition (e.g. propellant) is provided in the inflator housing and is activated after the initiator charge is ignited. Regardless, the generated shock wave is used in opening the burst disc and it is not opened due to heated gas having essentially the same pressure throughout the inflator housing. This is a conventional way of opening the burst disc by exceeding the burst pressure thereof. In contrast, all of the active material of the present invention has a total weight that, in the absence of the shock wave generated to open the burst disc, has insufficient caloric output to raise the pressure of the gas in the inflator to open or rupture the burst disc. With respect to more specifics concerning the weight of the active material, the weight is a function of a number of factors or parameters, namely: the pressure of the undisturbed or quiescent stored gas, the inner diameter of the inflator housing, the speed of sound in the undisturbed stored gas, the burn time of the initiator charge and any other propellant or active material provided with the inflator at the pressure of the undisturbed stored gas, and the effective impetus of the initiator charge plus one or more active materials that could be present as part of the inflator.

With regard to operation of the inflator, when the initiator charge is ignited, it produces a shock wave that moves from the first end of the inflator housing and through the unobstructed inflator housing having the stored gas to the burst disc and the second end of the inflator housing. At an instance in time before the shock wave, for example, reaches the burst disc, the pressure along the length of the housing depends upon the presence of the shock wave. For example, when the shock wave has traveled about one-half the length of the inflator housing, the pressure at this mid-portion of the inflator housing is greater than the gas pressure between about this mid-portion and the burst disc. The pressure differential is based on the difference in pressure between the pressure due to the shock wave and the pressure of the undisturbed or quiescent gas. By way of example, the pressure of the gas due to the shock wave might be 41368 KPa (6,000 psi) while the undisturbed pressure of the gas might be 31026 kPa (4,500 psi) After the shock wave reaches the burst disc, it is reflected therefrom. Upon reflection from the burst disc, a pressure is created between the burst disc and the shock wave. This created pressure is greater than the burst pressure of the burst disc thereby opening or rupturing it. After opening, the inflation gases in the inflator housing due to the stored gas and the gas generated by the activation of the initiator charge and/or other propellant escape through the opened burst disc.

Based on the foregoing summary, a number of important advantages and features result from this novel inflator. The inflator of the present invention can supply relatively cooler gas to an air bag or other inflatable. The temperature of this relatively cooler gas could be increased by including additional propellant that is not part of the initiator charge. With respect to releasing the gas in the inflator housing, the burst disc can be opened using a shock wave, particularly the reflected shock wave. The amount by weight of the active material that is ignited in opening the burst disc can be reduced since a shock wave, not propellant-produced heated gas and resulting pressure, causes the rupturing of the burst disc. Relatedly, the cost associated with the parts and assembly of the inflator are reduced in view of the relative straightforward design, including the preferred geometric constraints involving the initiator, the burst disc and unobstructed space therebetween within the inflator housing.

Additional advantages of the present invention will become readily apparent from the following discussion, particularly when taken together with the accompanying drawings.

### BRIEF DESCRIPTION OF THE DRAWINGS

Fig. 1 illustrates a longitudinal view of an inflator of the present invention before activation;
Fig. 2 is a diagram illustrating pressure of the gas in the inflator as a function of the distance along the inflator before the inflator is activated;
Fig. 3 diagrammatically illustrates a shock wave generated in the inflator about .25 millisecond after activation thereof;
Fig. 4 is a diagram illustrating pressure of gas in the inflator as a function of the distance or length of the inflator housing at about .25 millisecond after activation of the inflator;
Fig. 5 is similar to Fig. 3 except diagrammatically illustrating the shock wave at about .5 millisecond after activation;
Fig. 6 is a diagram similar to Fig. 4 except illustrating pressure as a function of distance or length along the inflator housing at about .5 millisecond after activation of the inflator;
Fig. 7 is also similar to Fig. 3 except that it diagrammatically illustrates the shock wave at about .6 millisecond after activation and with the burst disc just being opened by the reflected shock wave; and
Fig. 8 is a diagram also similar to Fig. 4 except that it illustrates gas pressure in the inflator housing as a function of the distance or length of the inflator housing at about .6 millisecond having a pressure sufficient to open the burst disc by means of the reflected shock wave.

### DETAILED DESCRIPTION

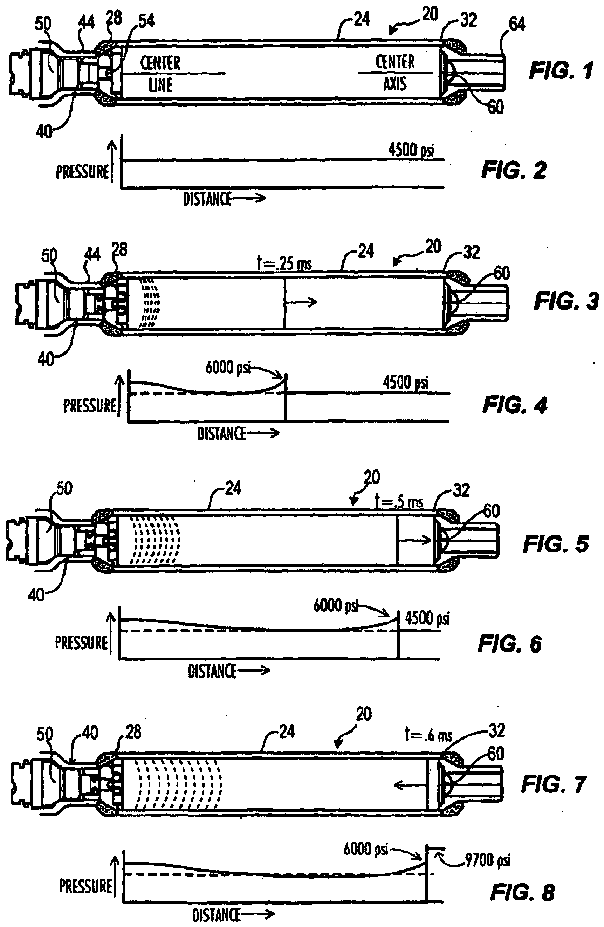

With reference to Fig. 1, an inflator 20 is illustrated for inflating an air bag or other inflatable located in a vehicle. The inflator 20 includes an elongated inflator housing 24 having a first or initiator end 28 a second or outlet end 32. The inflator 20 includes an initiator assembly 40 joined to the inflator housing 24 by crimping, welding or other suitable attachment. The initiator assembly 40 is used in initiating the activation of the inflator 20 by which inflation gases are released into the air bag or other inflatable. The initiator assembly 40 receives an ignition signal that triggers the initiator assembly 40 and subsequently results in release of the stored gas, as will be subsequently explained. The initiator assembly 40 can be a conventional design that includes an adapter 44 that is connected the inflator housing 24 and an initiator 50 that contains an initiator charge that is ignited when the ignition signal is received. The inflator 20 also includes at the initiator end 28, in the illustrated embodiment, an inlet member or disc 54 that is opened when the initiator charge is ignited and allows the shock wave generated by the activation of the initiator charge to travel along the length of the inflator housing 24. The inlet member 54 is opened in a conventional manner using the initiator charge and opens substantially independently of the shock wave or, at least, is not opened primarily by the shock wave.

With regard to the inflator housing 24, it contains stored gas that will constitute at least significant portions, if not substantially all, of inflation gas that is to be used to fill the inflatable. The stored gas can include one inert gas or, alternatively, can include a number of gas constituents, which can be a combination of one or more inert gases, oxygen, nitrogen and/or air. The one or more inert gases can include argon, neon, xeon and helium. Preferably, the stored gas contains a majority by weight of a mixture of argon and helium. Any oxygen gas is preferably no greater than about 20% by weight.

Adjacent the second end 32 of the inflator housing 24 or at least downstream of at least a majority of the stored gas or a majority of the length of the inflator housing 24, an outlet member or burst disc 60 is provided. Before activation, the stored gas is contained by the outlet member 60, inflator housing 24, inlet member 54 and various weldments. When the inflator 20 is activated, the burst disc 60 is caused to open or rupture due to the generated shock wave. When opened, the inflation gas or gases are able to escape through the ruptured burst disc 60 to a diffuser or other outlet unit 64 of the inflator 20 from which the inflation gas or gases are carried to the inflatable. The burst disc 60 has a burst pressure associated with it. In one embodiment, the burst pressure of the burst disc is 56537KPa(8200 psi) which means that, when it is subjected to such a pressure or greater, the burst disc 60 ruptures to allow the inflation gas or gases to escape from the inflator housing 24.

With respect to opening the burst disc 60 by overcoming its associated burst pressure, the initiator charge must have, by weight, at least some, if not all, of an active material or composition responsible for generating the shock wave, which will be used in opening the burst disc 60. Such an active material can be provided with the initiator charge only or, alternatively, such an active material could be provided by the initiator charge.together with one or more active ingredients or compositions provided in the inflator housing 24 (e.g. as part of a propellant). Regardless of how provided, the weight of the active material for generating a sufficient shock wave for opening the burst disc 60 is in the range of: .06 pD²ct/F to .6pD²ct/F, where
p is the pressure of the quiescent or undisturbed stored gas,
D is the inner diameter of the inflator housing 24,
c is the speed of sound in the quiescent or undisturbed stored gas,
t is the burn time of the initiator charge plus any other active material at pressure p, and
F is the effective impetus of the initiator charge plus any other one or more active material that might be present or utilized.

Thus it can be understood that of the inert gases, argon and helium offer different advantages. Because the weight of the active material is proportional to the speed of sound (c), it follows more charge (about 3 times) is required if helium is used. On the other hand, expanding from room temperature and high pressure (e.g.,27576 kPa (4000) to 62046 kPa (9000 psi)) argon's temperature is decreased by over 60°C, whereas helium's temperature is actually increased slightly by about 20°C. Thus engineering tradeoffs are required to optimize the mixture of inert gases.

With respect to the relationship of inflator parts or inflator geometry, certain geometric constraints are necessary, or at least desirable. The generated shock wave must have sufficient pressure or force associated with it in order to open the rupture disc 60. Consequently, no barrier or other impediment, which would render the shock wave ineffective, should be present between the burst disc 60 and the shock wave generated at the first end 28 of the inflator housing 24. At the very least, there should be no barrier that would affect the shock wave such that it would be insufficient to overcome the burst pressure of the outlet member 60. It is desirable that the initiator 50 be suitably arranged relative to the outlet member 60. The outlet member 60 can be defined as having a center axis that passes through its center. The initiator 50 can be defined as having an initiator center line that passes through the center of the initiator charge and which center line can be extended from the first end 28 to the second end 32 of the inflator housing 24. The inflator housing 24 can also be defined as having an inner diameter. Preferably, any distance from the extended initiator center line, in a direction perpendicular to the length of the inflator housing 24, to the center axis of the burst disc 60 is no greater than about .25 of the inner diameter of the inflator housing 24. Additionally, it is preferred that there be at least a minimum distance between the end of the initiator charge and the outlet member 60. In that regard, such a distance is at least twice the inner diameter of the inflator housing 24. In a preferred embodiment, the shock wave is bounded by the inner walls of the inflator housing. However, a shock waveguide could be employed within the inflator housing.

In one embodiment, the inflator 20 is a curtain inflator containin 1,1 moles of which is stored in the inflator housing 24 at a pressure in the range of 20684 kPa (3,000 psi) to 6894 kPa (10,000 psi) and typically stored at 31026 kPa at 20°C. Such a common pressure of 31026 kPa (4500 psi) is illustrated graphically in Fig. 2 as a function of or associated with the distance or length of the inflator housing 24 from its first end 28 to its second end 32. As can be understood from Fig. 2, before activation of the inflator, while it is in its undisturbed quiescent state, the gas pressure is the same along each portion or cross-section of the inflator housing 24. Accordingly, the average pressure of the quiescent stored gas (sum of discrete or integrated pressures along the length of the inflator housing divided by the total volume of the stored gas in the inflator housing) is, in this embodiment, 31026 kPa (4500 psi). In one embodiment, the stored gas has a composition of 76% argon, 20% oxygen and 4% helium, although pure argon, or pure helium, or pure nitrogen or air or any combination of such non-reactive gases could be used. In accordance with this embodiment, to generate the shock wave, the inflator 20 only needs a single initiator charge containing about 0.25 gram of zirconium and potassium chlorate (Zr + KClO₄), which is a standard ignition composition. This 0.25 gram of non-detonating material creates a "strong shock", as defined in the fi eld of shock dynamics, which propagates down the length of the inflator housing 24, such as a 270 mm long gas column associated with a typical curtain inflator. In another embodiment, a detonator with less than .25 gram of high explosive could also be used.

With reference to Figs. 3-8, there is more discussion concerning the use and operation of the shock wave, upon activation of the inflator 20. Referring to Fig. 3, the inflator 20 has been activated with the triggering of the initiator 50. The initiator disc 54 has been opened due to the ignition of the initiator charge and the force resulting therefrom. At a time of about .25 millisecond after initiator charge ignition, a shock wave has been generated and is traveling along the length of the inflator housing 24 towards its second end 32. As illustrated in Fig. 4, at about mid portions or about one-half the distance or length of the inflator housing 24, different pressures are present in the inflator housing 24, depending upon the travel or location of the generated shock wave. At the designated time (t = 25ms), the gas pressure on one side of the shock wave including the front of the shock wave (second half of the length of the inflator housing 24 from about its mid portions to the second end 32) remains undisturbed at an undisturbed pressure of about 31026 kPa (4500 psi). Contrastingly, the gas pressure in the inflator housing 24 between about the first end 28 and the mid portions of the inflator housing 24 is noticeably different due to the shock wave. In this illustration and embodiment, the pressure at about the mid-portions of the inflator housing 24 at this time is about 41 364 kPa (6000 psi). Referring next to Fig. 5, the shock wave continues to move along the length or distance of the inflator housing towards the second end 32 and is graphically illustrated at a time of about .5 millisecond after ignition of the initiator charge. At this time the outlet member 60 has not yet ruptured. More specifically, at about t = 5ms, the shock wave has essentially moved or traveled from the first end 28 of the inflator housing 24 to the second end 32 where it is just about to contract the outlet member 60. As graphically represented by Fig. 6, a noticeable increase in pressure has occurred along at least certain areas of the inflator housing length, with the gas pressure being about 41364 kPa (6000 psi) immediately adjacent to the burst disc 60 while, again, on the downstream side of the shock wave, along the area or areas immediately upstream of the burst disc 60, the gas pressure remains at the undisturbed pressure of about 31023 kPa (4500 psi).

With reference to Fig. 7, the inflator 20 is schematically illustrated at about the time at which the burst pressure of the outlet member 60 is met or exceeded whereby the outlet member 60 is opened or ruptured and inflation gas or gases are able to escape from the inflator housing 24. In this embodiment, this time is about t = .6 ms after inflator 20 activation and the shock wave has traveled substantially the entire length of the inflator housing 24, although in other embodiments it may not travel as far, such as one-half or less of the length of the inflator housing 24. At about this time, the shock wave has reflected from the outlet member 60 and created a pressure between the outlet member 60 and the shock wave that is greater than the burst pressure of the outlet member 60. In this illustrated embodiment, this pressure is about 66872 kPa (9700 psi). It is noted that it is not the initial or direct shock wave that has caused the rupturing of the burst disc 60; rather, the resulting pressure from the reflected shock wave exceeds the burst pressure of the outlet member 60. It is further noted that, at the time the burst pressure of the outlet member 60 is exceeded, the gas pressures along the length or distance associated with the inflator housing 24 are meaningfully less than the pressure exerted on the outlet member 60 by the reflected shock wave. In the illustrated embodiment such gas pressures along the length of the inflator housing 24 vary from about 31023 kPa (4500 psi) to about 41364 kPa (6000 psi). Stated another way, the average pressure of the stored gas is less than the burst pressure of the outlet member 60, when the outlet member 60 is opened due to the reflected shock wave. The average pressure of the gas, at the time immediately before the opening of the outlet member 60, is determined by averaging the gas pressure at each of a number of discrete cross-sectional areas of the inflator housing or an integration of such gas pressures.

As can be appreciated from the description of the shock wave used to open the outlet member 60, unlike conventional inflator designs that rely on uniform pressure throughout the inflator housing to open a burst disc, and which also do not rely on a mechanical device, such as a projectile, to open the burst disc, the use of the shock wave of the present invention does not require a heated gas to create enough pressure throughout the inflator housing, to overcome the burst pressure of the burst disc. Relatedly, the outlet member 60 is caused to rupture or open independently of the volume of the stored gas. That is to say, unlike conventional inflator designs that rely on uniform pressure to exceed the burst pressure of the burst disc and which uniform pressure is achievable only as a function of, among other things, the volume of the stored gas, the present invention relies on a shock wave for exceeding a burst pressure that is not a function of the volume of the stored gas. The inflator 20 also has advantages related to the speed at which a desired pressure is realized in an inflatable to which it supplies inflation gases. In particular, the "time-to-first" gas is less than about 0.5ms for a 143mm long inflator and less than about 1.0ms for a 270mm long inflator. The "time-to-first gas" refers to the time from immediately after the initiator charge is ignited for the pressure in a 0.028 m³ (1 ft³) tank to reach a pressure of 2kPa (kilopascals), as measured by a SAE Class 60 filter.

### EXAMPLE

A curtain inflator having a 270 mm long gas column was devised in which only a single initiator was utilized containing 0.25 gram of Zr+KCLO₄. The undisturbed gas pressure in this curtain inflator was about 31026 kPa (4500 psi) with the stored gas being primarily argon and the inflator housing having a 21 mm inner diameter. The outlet member or burst disc has a 56537 kPa (8200 psi) burst pressure. When this inflator was activated, after reflection, the pressure between the reflected shock wave and the outlet member 60 was sufficient (about 66879 kPa (9700 psi)) to rupture the burst disc, with adequate margin for functioning at -40°C, assuming a 10% loss of gas due to leakage over a 15 year period. Except in the near vicinity of the shock front, the gas pressure in this inflator was nearly the gas storage pressure. To meet government regulations, the pressure to open the burst disc is typically 1.8 times the 20°C storage pressure (e.g. 31023 kPa (4500 psi)). At -40°C and with 10% loss of gas (assuming simulated 15 years of leakage), the 31023 kPa (4500 psi) storage pressure at 20°C is reduced to (3200 psi), which constitutes the worst case to open the burst disc. The shock wave created by the non-detonating .25 gram of initiator charge travels through the 22061 kPa (3200 psi) stored gas. Upon reflection at the burst disc a localized 68940 kPa (10,000 psi) of pressure is generated, which is sufficient to open the burst disc. The traditional or conventional way of opening the burst disc is to heat the entire gas (e.g. 1.1 moles) to a sufficient temperature that the heating gas pressure exceeds the burst strength or pressure (e.g. 56531 kPa (8200 psi)) of the outlet member. To heat the entire gas at such a temperature requires substantially more energy than to create a localized shock wave. In particular, to heat the entire gas with such standard pyrotechnic materials, such as Zr+KClO₄, B+KNO₃ or PVC+KClO₄ requires over 2 grams.

The foregoing discussion of the invention has been presented for purposes of illustration and description. Further, the description is not intended to limit the invention to the form disclosed herein. Consequently, variations and modifications commensurate with the above teachings, within the skill and knowledge of the relevant art, are within the scope of the present invention. The embodiments described hereinabove are further intended to explain the best mode presently known of practicing the invention and to enable others skilled in the art to utilize the invention in such or in other embodiments and with various modifications required by their particular application or uses of the invention. It is intended that the appended claims be construed to include alternative embodiments to the extent permitted by the prior art.

## Claims

1. An inflator (20) for inflating an inflatable using stored gas in which an outlet member (60) is opened to release the stored gas, comprising:
an inflator housing (24) containing stored gas and including an outlet member (60) through which said stored gas escapes when said outlet member (60) is opened, said outlet member (60) having a burst pressure;
an initiator assembly (40) including an initiator (50) with an initiator charge, said initiator charge being ignited when the inflatable is to be inflated using said stored gas,
said stored gas having a quiescent pressure before ignition of said initiator charge and at least first and second average pressures, said first average pressure being greater than said quiescent pressure and being present at a time after ignition of said initiator charge and before said outlet member (60) is opened, with said outlet member (60) being opened while said second average pressure is present and said second average pressure is less than said burst pressure of said outlet member (60),
said initiator charge develops a shock wave when ignited; and
said outlet member (60) is opened using said shock wave applied thereto; and
wherein the initiator charge has a center line associated therewith that passes through its center and is extended toward said outlet member (60), the outlet member (60) has a centre axis, and the inflator housing (24) has an inner diameter and that the center line of the initiator and the center axis of the outlet member (60) is co-axial; and
wherein:
said inflator housing (24) has a first end (28) and a second end (32), said initiator (50) being located upstream of at least a majority of said stored gas and said outlet member (60) being located downstream of at least a majority of said stored gas, and wherein:
said initiator charge has at least a weight in the range of about .06pD²ct/F to .6pD²ct/F, where p is the pressure of said stored gas in its undisturbed state, D is the inner diameter of said inflator housing (24), c is the speed of sound in said stored gas in its undisturbed state, t is the burn time of said initiator charge at pressure p, and F is the impetus of the said initiator charge.

2. An inflator (20) as claimed in Claim 1, wherein:
said initiator charge includes an active material useful in generating said shock wave and a total active material weight of the inflator (20), including said active material weight of said initiator charge, in the absence of said shock wave directed against said outlet member (60), has insufficient caloric output to raise said pressure of inflation gas including said stored gas to open said outlet member (60).

3. An inflator (20) as claimed in Claim 1, wherein:
the inflator (20) has a time-to-first gas parameter associated therewith and in which the time-to-first gas parameter is less than about 0.5ms for a 143mm long inflator (20) and is less than about 1.0ms for a 270mm long inflator (20), with the time-to-first gas being the time from immediately after igniting said initiator charge for a 0,028 m3 (1 cubic foot) tank to reach 2 kPa, as measured by a SAE class 60 filter.

4. An inflator (20) as claimed in Claim 1, wherein:
said initiator charge has a weight of about .25 gram Zr + KClO₄, said stored gas has a majority, by weight, of argon at about 31023 Kpa (4500 psi), said inflator housing has about a 21 mm inner diameter and the burst pressure of said outlet member is about 56531 KPa (8200 psi).

5. A method for inflating an inflatable using an inflator (20) according to claim 1 that includes an inflator housing (24) having a length and containing stored gas under pressure, an initiator charge and an outlet member (60) having a burst pressure spaced therefrom, comprising:
igniting said initiator charge to develop a shock wave using said initiator charge, wherein:
- said initiator charge, when ignited, develops said shock wave; and
- said outlet member (60) is opened using said shock wave applied thereto after having travelled through said stored gas at least one-half said length of said inflator housing (24).

6. A method as claimed in Claim 5, wherein:
before said opening step is conducted, said stored gas has a quiescent pressure and at least a first average pressure, with said quiescent pressure being present before said igniting step and said first average pressure being present after said igniting step which is increased by said shock wave, said first average pressure being greater than said quiescent pressure.

7. A method as claimed in Claim 6, wherein:
said stored gas has a second average pressure while said opening step is being conducted and said second average pressure is less than said burst pressure of said outlet member (60).

8. A method as claimed in Claim 5, wherein:
said shock wave, only after reflection from said outlet member (60), creates a pressure between said outlet member (60) and said shock wave greater than said first pressure of said outlet member.

## Patentansprüche

1. Aufblasvorrichtung (20) zum Aufblasen einer aufblasbaren Einrichtung unter Verwendung von gespeichertem Gas, in welcher ein Auslasselement (60) geöffnet wird, um das gespeicherte Gas freizugeben, umfassend:
ein Aufblasvorrichtungsgehäuse (24), das gespeichertes Gas enthält und ein Auslasselement (60) aufweist, durch welches das gespeicherte Gas entweicht, wenn das Auslasselement (60) geöffnet wird, wobei das Auslasselement (60) einen Berstdruck aufweist;
eine Initiatoranordnung (40), die einen Initiator (50) mit einer Initiatorladung aufweist, wobei die Initiatorladung gezündet wird, wenn die aufblasbare Einrichtung unter Verwendung des gespeicherten Gases aufgeblasen werden soll,
wobei das gespeicherte Gas einen Ruhedruck vor der Zündung der Initiatorladung und mindestens einen ersten und einen zweiten mittleren Druck aufweist, wobei der erste mittlere Druck größer als der Ruhedruck ist und zu einem Zeitpunkt nach Zündung der Initiatorladung, und bevor das Auslasselement (60) geöffnet wird, vorhanden ist, wobei das Auslasselement (60) geöffnet wird, während der zweite mittlere Druck vorhanden ist, und der zweite mittlere Druck kleiner als der Berstdruck des Auslasselements (60) ist,
wobei die Initiatorladung eine Stoßwelle erzeugt, wenn sie gezündet wird; und
wobei das Auslasselement (60) unter Verwendung der auf dasselbe zur Einwirkung gebrachten Stoßwelle geöffnet wird; und
wobei die Initiatorladung eine ihr zugeordnete Mittellinie aufweist, welche durch ihren Mittelpunkt verläuft und in Richtung des Auslasselements (60) verlängert ist,
wobei das Auslasselement (60) eine Mittelachse aufweist und das Aufblasvorrichtungsgehäuse (24) einen Innendurchmesser aufweist, und dass die Mittellinie des Initiators und die Mittelachse des Auslasselements (60) koaxial sind; und
wobei:
das Aufblasvorrichtungsgehäuse (24) ein erstes Ende (28) und ein zweites Ende (32) aufweist, wobei der Initiator (50) stromaufwärts mindestens eines überwiegenden Teils des gespeicherten Gases angeordnet ist und das Auslasselement (60) stromabwärts mindestens eines überwiegenden Teils des gespeicherten Gases angeordnet ist, und wobei:
die Initiatorladung mindestens ein Gewicht im Bereich von etwa 0,06 pD²ct/F bis 0,6 pD²ct/F aufweist, wobei p der Druck des gespeicherten Gases in seinem ungestörten Zustand ist, D der Innendurchmesser des Aufblasvorrichtungsgehäuses (24) ist, c die Schallgeschwindigkeit in dem gespeicherten Gas in seinem ungestörten Zustand ist, t die Brenndauer der Initiatorladung bei dem Druck p ist und F die Energie (Impetus) der Initiatorladung ist.

2. Aufblasvorrichtung (20) nach Anspruch 1, wobei:
die Initiatorladung ein aktives Material aufweist, das beim Erzeugen der Stoßwelle von Nutzen ist, und ein Gesamtgewicht des aktiven Materials der Aufblasvorrichtung (20), einschließlich des Gewichts des aktiven Materials der Initiatorladung, bei Nichtvorhandensein der gegen das Auslasselement (60) gerichteten Stoßwelle eine unzureichende kalorische Leistung aufweist, um den Druck des Aufblasgases, einschließlich des gespeicherten Gases, so zu erhöhen, dass er das Auslasselement (60) öffnet.

3. Aufblasvorrichtung (20) nach Anspruch 1, wobei:
die Aufblasvorrichtung (20) einen ihr zugeordneten Parameter "Zeit bis zum ersten Gas" aufweist, und wobei der Parameter "Zeit bis zum ersten Gas" kleiner als etwa 0,5 ms für eine 143 mm lange Aufblasvorrichtung (20) ist und kleiner als etwa 1,0 ms für eine 270 mm lange Aufblasvorrichtung (20) ist, wobei die "Zeit bis zum ersten Gas" die Zeit ist, die ein Behälter von 0,028 m³ (1 Kubik-Foot) unmittelbar nach dem Zünden der Initiatorladung benötigt, um 2 kPa zu erreichen, gemessen mit einem Filter der SAE-Klasse 60.

4. Aufblasvorrichtung (20) nach Anspruch 1, wobei:
die Initiatorladung ein Gewicht von etwa 0,25 Gramm Zr + KClO₄ hat, das gespeicherte Gas einen gewichtsmäßig überwiegenden Anteil von Argon mit etwa 31023 kPa (4500 psi) hat, das Aufblasvorrichtungsgehäuse einen Innendurchmesser von etwa 21 mm hat und der Berstdruck des Auslasselements etwa 56531 kPa (8200 psi) beträgt.

5. Verfahren zum Aufblasen einer aufblasbaren Einrichtung unter Verwendung einer Aufblasvorrichtung (20) nach Anspruch 1, welche ein Aufblasvorrichtungsgehäuse (24), das eine Länge hat und gespeichertes Druckgas enthält, eine Initiatorladung und ein davon beabstandetes Auslasselement (60), das einen Berstdruck hat, aufweist, umfassend:
Zünden der Initiatorladung, um unter Verwendung der Initiatorladung eine Stoßwelle zu erzeugen, wobei:
- die Initiatorladung, wenn sie gezündet wird, die Stoßwelle erzeugt; und
- das Auslasselement (60) unter Verwendung der auf dasselbe zur Einwirkung gebrachten Stoßwelle geöffnet wird, nachdem diese sich durch das gespeicherte Gas über mindestens die Hälfte der Länge des Aufblasvorrichtungsgehäuses (24) ausgebreitet hat.

6. Verfahren nach Anspruch 5, wobei:
bevor der Schritt des Öffnens durchgeführt wird, das gespeicherte Gas einen Ruhedruck und mindestens einen ersten mittleren Druck aufweist, wobei der Ruhedruck vor dem Schritt des Zündens vorhanden ist und der erste mittlere Druck nach dem Schritt des Zündens vorhanden ist, welcher durch die Stoßwelle erhöht wird, wobei der erste mittlere Druck größer als der Ruhedruck ist.

7. Verfahren nach Anspruch 6, wobei:
das gespeicherte Gas einen zweiten mittleren Druck aufweist, während der Schritt des Öffnens durchgeführt wird, und der zweite mittlere Druck kleiner als der Berstdruck des Auslasselements (60) ist.

8. Verfahren nach Anspruch 5, wobei:
die Stoßwelle erst nach Reflexion von dem Auslasselement (60) einen Druck zwischen dem Auslasselement (60) und der Stoßwelle erzeugt, der größer als der erste Druck des Auslasselements ist.

## Revendications

1. Accessoire de gonflage (20) pour gonfler un dispositif gonflable en utilisant un gaz stocké dans lequel un élément de sortie (60) est ouvert pour dégager le gaz stocké, comprenant :
un logement d'accessoire de gonflage (24) contenant du gaz stocké et incluant un élément de sortie (60) à travers lequel ledit gaz stocké s'échappe quand ledit élément de sortie (60) est ouvert, ledit élément de sortie (60) ayant une pression d'éclatement ;
un ensemble d'amorceur (40) incluant un amorceur (50) avec une charge d'amorceur, ladite charge d'amorceur étant allumée quand le dispositif gonflable doit être gonflé en utilisant ledit gaz stocké,
ledit gaz stocké ayant une pression de repos avant d'allumage de ladite charge d'amorceur et au moins une première et une seconde pressions moyennes, ladite première pression moyenne étant supérieure à ladite pression de repos et étant présente à un moment après l'allumage de ladite charge d'amorceur et avant que ledit élément de sortie (60) soit ouvert, avec ledit élément de sortie (60) étant ouvert alors que ladite seconde pression moyenne est présente et ladite seconde pression moyenne est inférieure à ladite pression d'éclatement dudit élément de sortie (60),
ladite charge d'amorceur développe une onde de choc quand elle est allumée ; et
ledit élément de sortie (60) est ouvert en utilisant ladite onde de choc qui lui y est appliquée ; et
dans lequel la charge d'amorceur a une ligne centrale associée qui passe à travers son centre et s'étend vers ledit élément de sortie (60),
l'élément de sortie (60) a un axe central et le logement d'accessoire de gonflage (24) a un diamètre intérieur et la ligne centrale de l'amorceur et l'axe central de l'élément de sortie (60) sont coaxiaux ; et
dans lequel :
ledit logement d'accessoire de gonflage (24) a une première extrémité (28) et une seconde extrémité (32), ledit amorceur (50) étant situé en amont d'au moins une majeure partie dudit gaz stocké et ledit élément de sortie (60) étant situé en aval d'au moins une majeure partie dudit gaz stocké, et dans lequel :
ladite charge d'amorceur a au moins un poids dans la plage d'environ 0,06 pD²ct/F à 0,6 pD²ct/F, où p est la pression dudit gaz stocké dans son état non perturbé, D est le diamètre intérieur dudit logement d'accessoire de gonflage (24), c est la vitesse du son dans ledit gaz stocké dans son état non perturbé, t est le temps de combustion de ladite charge d'amorceur à la pression p et F est l'impulsion de ladite charge d'amorceur.

2. Accessoire de gonflage (20) selon la revendication 1, dans lequel :
ladite charge d'amorceur inclut un matériau actif utile pour générer ladite onde de choc et un poids total du matériau actif de l'accessoire de gonflage (20), y compris ledit poids du matériau actif de ladite charge d'amorceur, en l'absence de ladite onde de choc dirigée contre ledit élément de sortie (60), a un rendement calorifique insuffisant pour élever ladite pression du gaz de gonflage incluant ledit gaz stocké afin d'ouvrir ledit élément de sortie (60).

3. Accessoire de gonflage (20) selon la revendication 1, dans lequel :
l'accessoire de gonflage (20) a un paramètre d'intervalle avant la première compression associé et dans lequel le paramètre d'intervalle avant la première compression est inférieur à environ 0,5 ms pour un accessoire de gonflage (20) long de 143 mm et est inférieur à environ 1,0 ms pour un accessoire de gonflage (20) long de 270 mm, avec l'intervalle avant la première compression étant le moment suivant immédiatement l'allumage de ladite charge d'amorceur pour un réservoir de 0,028 m³ (1 pied cubique) afin d'atteindre 2 kPa, comme mesuré par un filtre 60 de classe SAE.

4. Accessoire de gonflage (20) selon la revendication 1, dans lequel :
ladite charge d'amorceur a un poids d'environ 0,25 gramme de Zr + KClO₄, ledit gaz stocké possède une majorité, en poids, d'argon à environ 31023 kPa (4500 psi), ledit logement d'accessoire de gonflage a un diamètre intérieur d'environ 21 mm et la pression d'éclatement dudit élément de sortie est d'environ 56531 kPa (8200 psi).

5. Procédé de gonflage d'un dispositif gonflable en utilisant un accessoire de gonflage (20) selon la revendication 1, qui inclut un logement d'accessoire de gonflage (24) ayant une longueur et contenant du gaz stocké sous pression, une charge d'amorceur et un élément de sortie (60) ayant une pression d'éclatement espacée de celle-ci, comprenant de :
allumer ladite charge d'amorceur pour développer une onde de choc en utilisant ladite charge d'amorceur, dans lequel :
- ladite charge d'amorceur, quand elle est allumée, développe ladite onde de choc ; et
- ledit élément de sortie (60) est ouvert en utilisant ladite onde de choc qui lui est appliquée après avoir circulé à travers ledit gaz stocké sur au moins une demi-longueur dudit logement d'accessoire de gonflage (24).

6. Procédé selon la revendication 5, dans lequel :
avant que ladite étape d'ouverte soit mise en oeuvre, ledit gaz stocké a une pression au repos et au moins une première pression moyenne, avec ladite pression au repos étant présente avant ladite étape d'allumage et ladite première pression moyenne étant moyenne après ladite étape d'allumage qui est augmentée par ladite onde de choc, ladite première pression moyenne étant supérieure à ladite pression au repos.

7. Procédé selon la revendication 6, dans lequel :
ledit gaz stocké a une seconde pression moyenne pendant que ladite étape d'ouverture est mise en oeuvre et ladite seconde pression moyenne est inférieure à ladite pression d'éclatement dudit élément de sortie (60).

8. Procédé selon la revendication 5, dans lequel :
ladite onde de choc, après réflexion à partir dudit élément de sortie (60), crée une pression entre ledit élément de sortie (60) et ladite onde de choc supérieure à ladite première pression dudit élément de sortie.
